# EUROPEAN PATENT SPECIFICATION

(11) **EP 3 554 890 B1**
(45) Date of publication and mention of the grant of the patent: **04.11.2020**
(21) Application number: 17832810.0
(22) Date of filing: 19.12.2017
(51) Int. Cl.: B60P 3/32, B60P 3/39

(54) **SUSPENDED BED**
HÄNGEBETT
LIT SUSPENDU

(30) Priority: 19.12.2016 IT 201600127978
(43) Date of publication of application: 23.10.2019
(73) Proprietor: ST.LA. S.R.L., 56025 Pontedera (IT)
(72) Inventor: ZAPPOLINI, Stefano, 56025 Pontedera (IT)
(74) Representative: Leotta, Antonio
(86) International application number: PCT/IB2017/058146
(87) International publication number: WO 2018/116169

(56) References cited:
- EP-A1- 2 987 429
- DE-A1- 19 620 796
- JP-A- 2016 088 644
- KR-A- 20140 027 789
- US-A- 593 445

## Description

### TECHNICAL FIELD

The present invention relates to the technical field inherent to furniture for caravans, campers, motor homes, cabin boats and the like, with particular reference to the foldaway beds.

### STATE OF THE ART

For these types of vehicles and boats, the primary requirement is to make the most, in the most rational way, of the available spaces which by their nature are limited when not small.

One of the most used systems for optimizing spaces is the hinged articulation of the furnishing elements, so as to be able to rotate them, or overturn them in order to dispose them in conditions of use or rest, depending on the case.

The system just mentioned is also applied to beds, for example in many truck cabins.

Another constructive method used for some types of beds requires that they are suspended, so that they can be lowered when needed and lifted when not needed, so as to move their encumbrance to a position where they disturb less.

To move said suspended beds, it is known a rope system which requires four of said suspension cables, or belts, which are arranged substantially at the corners of the bed; each rope has an upper end hanging from a fixed support, for example the roof of the cabin, from which a substantially vertical branch extends ending where the rope engages under a return pulley provided in the bed, from which it is then deflected below the latter, substantially horizontally.

All the ropes, therefore, belong to a device, housed under the same bed and shaped as much as possible flattened, designed to pull, collect and hold an equal length of each rope during the lifting and, vice versa, to release equal amount during the lowering of the bed.

Various types of such devices are known, many of which are also provided with measures to aid the lifting phase and to brake the lowering phase, counteracting the gravity.

In the Document EP2987429 it is protected a device comprising a slide to which the four ropes each coming from a corner of the bed support platform, suitably deflected by return rollers so that all of them are horizontal and oriented and that the direction of pull and release is concordant.

The slide is slidable along a rectilinear guide, by the action of a linear actuator, arranged parallel to said guide and capable of imparting to the same slide a first stroke in which the four ropes are simultaneously pulled, determining the lifting of the bed.

During the lowering of the bed, the ropes tend to drag the slide in the opposite direction, for a second run inverse to the first, with consequent opposite movement of the linear actuator.

In the preferred described and illustrated embodiment, the linear actuator is constituted by a gas spring, whose active extension stroke is accomplished during the lifting of the bed.

During the lowering of the bed, favored by the gravity, the ropes drag the slide in the opposite direction, causing a compression phase of the gas spring, which will be recharged for a new bed lifting once the lowering is complete.

The linear actuator, according to a variant of the claimed embodiment, is of motorized type.

The device described and protected in the document mentioned above requires a unitary relationship between the stroke of the actuator, that of the slide and the length of the pulled or released ropes stretches, so that necessarily even the amplitude of the ascent and descent movement of the bed has the same value.

This represents a functional drawback, given by the fact that the kinematism, as proposed, has a maximum limit for the ascent and descent excursion fixed, in an impassable way, by the maximum length of the device allowed by the dimensions of the support platform.

The same characteristic also proves to be a structural disadvantage, since it requires a very long linear actuator which, if constituted by a gas spring, can be not very effective and/or subject to anomalous bending of the stem, or rather expensive if it consists of a linear motor.

Moreover, the device does not allow any calibration maneuver that allows to modify the balances and therefore the response, for example to adapt it to variations in the total weight of the bed, due to different mattresses or blankets or other. Another example of suspended bed is shown in KR20140027789 A.

### SUMMARY OF THE INVENTION

Object of the present invention is therefore to propose a device for operating a lifting system of a suspended bed which is shaped so as to be at the same time compact, reliable in operation and able to overcome the drawbacks of known devices and, in particular, of that referred to in said document.

Another object of the invention is to provide a device in which it is possible to obtain a considerable vertical excursion of the bed, without this leading to constructive complications.

A further object of the invention is to provide the device with locking means to stabilize at least the maximum lifting position.

Yet another object of the invention is to obtain a simple and low-cost device.

These and other objects are fully achieved by a suspended bed having the characteristics set out in claim 1. Preferred features of the invention are set out in the dependent claims.

### BRIEF DESCRIPTION OF THE DRAWINGS

The characteristics of the invention will be clear from the following description of a preferred embodiment of the device for operating a lifting system of a suspended bed in question, in accordance with what is proposed in the claims and with the aid of the attached drawings, in which:
Fig. 1 shows a schematic side view of a suspended bed with a rope system;
Fig. 2 shows an axonometric view from below of the bed of Fig. 1, in which the device in question is visible;
Fig. 3 shows a partial view, from below, of the bed of Fig. 2, with the device in the position corresponding to the lifted bed;
Fig. 4 shows a view similar to Fig. 3, with the device in the position corresponding to the lowered bed;
Figs. 5 and 6 show views similar to Figs. 3 and 4, relating to a second embodiment of the device;
Fig. 7 illustrates a further embodiment of the device of the invention.

### DESCRIPTION OF THE PREFERRED EMBODIMENTS

In the above-mentioned figures, the device object of the present invention has been indicated as a whole with reference 1.

The device 1 is adapted to operate a lifting mechanism 2 of a suspended bed 3, for example of the type mentioned in the introduction, provided in caravans, campers, motor homes, cabin boats and the like.

In a self-known manner, the lifting mechanism 2 comprises a supporting frame 20 for said bed 3, of rectangular shape, and at least four ropes 21, 22, 23, 24, each of them fixed in suspension to a fixed structure A at the top, consisting for example of the cabin roof of one of said vehicles.

Each rope 21, 22, 23, 24 is extended downwards close to a corresponding corner of said supporting frame 20, to then sequentially engages returning rollers 25, provided in the latter with suitable positions and orientations, for deviating the same rope according to a predetermined path that ends with a horizontal portion 21H, 22H, 23H, 24H, arranged beneath said supporting frame 20 and almost parallel to the corresponding horizontal portions 21H, 22H, 23H, 24H of the remaining ropes.

All the ends of the horizontal portions 21H, 22H, 23H, 24H are fixed to a common draw hook 26, which is provided to be moved parallel to the same ropes 21, 22, 23, 24 by the device 1.

The latter, according to the invention, comprises at least one pulley 4, which can be rotated by a cross-member 27 of the supporting frame 20, with substantially vertical rotation axis.

The pulley 4 coaxially supports, on one side, a cogwheel 40, of a suitably inferior diameter.

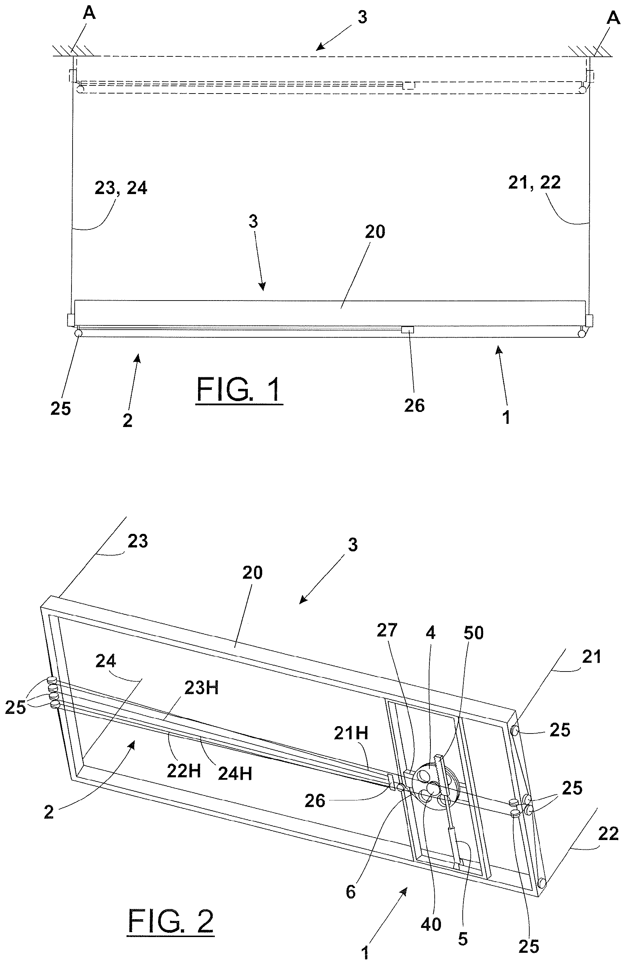

A linear drive element 5 is made integral, with an end of its own, to the supporting frame 20 and having associated with the other end of its own, motion transformation means which transform said translation into a synchronous rotation of said cogwheel (40) and pulley (4). More specifically, in the embodiment of Figs 2, 3 and 4 the motion transformation means are constituted by a rack 50, extended parallel to the element 5 itself and intended to gear with said cogwheel 40 to rotate it together with said pulley 4.

The device 1 further comprises a flexible cable 6, fixed with one end to said pulley 4 and wound on the latter with an intermediate portion of its own, for then engaging at least one returning roller 60 arranged downstream of the latter and being fixed, with the remaining end, to said draw hook 26 of the ropes 21, 22, 23, 24.

On the rotation of the pulley 4, therefore, there is a winding or unwinding of the flexible cable 6 on or from it, to which corresponds an actuation of the same flexible cable 6 for impressing/allowing to said draw hook 26 rectilinear excursions, respectively in a first direction T, in which the same hook 26 and the ropes 21, 22, 23, 24 are urged into shot to lift said bed 3, and in an opposite direction R, in phase relation with the lowering of the same bed 3, wherein to the hook 26 and to the ropes 21, 22, 23, 24 a return stroke is allowed.

In the embodiment shown in Figs. 2, 3, 4, said linear drive element 5 is constituted by a gas spring, whose push action is directed to impart a translation of said rack 50 and, consequently, a synchronous rotation of said cogwheel 40 and pulley 4 according to a direction concordant with the lifting action of the bed 3, as further specified below.

Specularly, the rotation of the pulley 4 in the direction in which the bed 3 falls, causes a translation in the opposite direction of the rack 50, with the complete re-entry of the stem 50 of the gas spring 5.

As can be easily understood, by varying the ratio between the diameter of the pulley 4 and that of the cogwheel 40, a greater or smaller linear excursion of the flexible cable 6 is obtained, at the same run of the rack 50.

In said embodiment, it is advantageously envisaged to associate to the linear drive element 5 locking means, suitable for stabilizing at least the raised position of said bed 3.

Said locking means are of substantially known type and therefore are not shown in detail; by way of example, they can be constituted by a pin, or a pawl, which snaps into position by engaging a hole or a tooth in the pulley 4 or in the rack 50, upon reaching said raised position of said bed 3.

The release is made by a manual control (also not shown) brought to the side of the bed 3 by a suitable linkage.

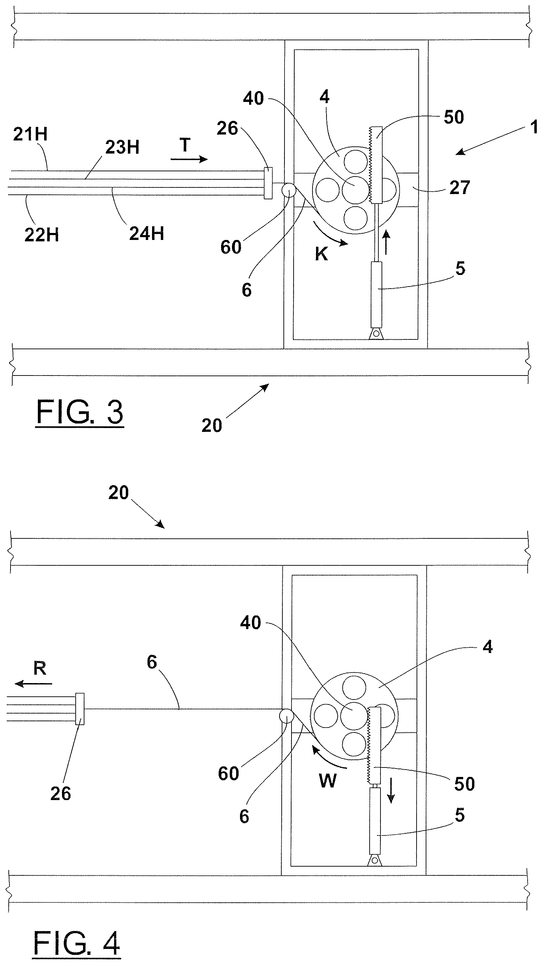

The operation of the device 1 thus produced, however already partially anticipated by the description above, provides that the raising of the bed 3 is at least facilitated by the pushing action of the gas spring 5, which acting on the pulley 4 through the rack 50 and the cogwheel 40 makes it rotate in a first direction K, in which the flexible cable 6 pulls the draw hook 26 (arrow T in Fig. 3), determining for it a rectilinear excursion proportional to the development of the winding circumference on the pulley 4 and, consequently, equal pull stresses on the ropes 21, 22, 23, 24.

The lowering of the bed 3, vice versa, is at least partly determined by the gravity, so that the ropes 21, 22, 23, 24 drag in the opposite direction the draw hook 26 (arrow R in Fig. 4) which, in turn, pull the flexible cable 6; the pulley 4 is therefore driven to rotate in the opposite direction W, causing the return of the stem 50 of the gas spring 5, which is thus recharged.

As a constructive variant, it is expected that the linear drive element 5 is costituted by a motorized actuator; the operation of the device 1 remains substantially unchanged regarding the movement of the pulley 4, of the flexible cable 6, of the draw hook 26 and of the ropes 21, 22, 23, 24, except for the fact that the ascent and descent movements of the bed 3 become fully automatic and do not require any manual intervention or "help".

For this variant, the presence of said locking means may not be necessary, since the motorized actuator could advantageously be of the self-braking type.

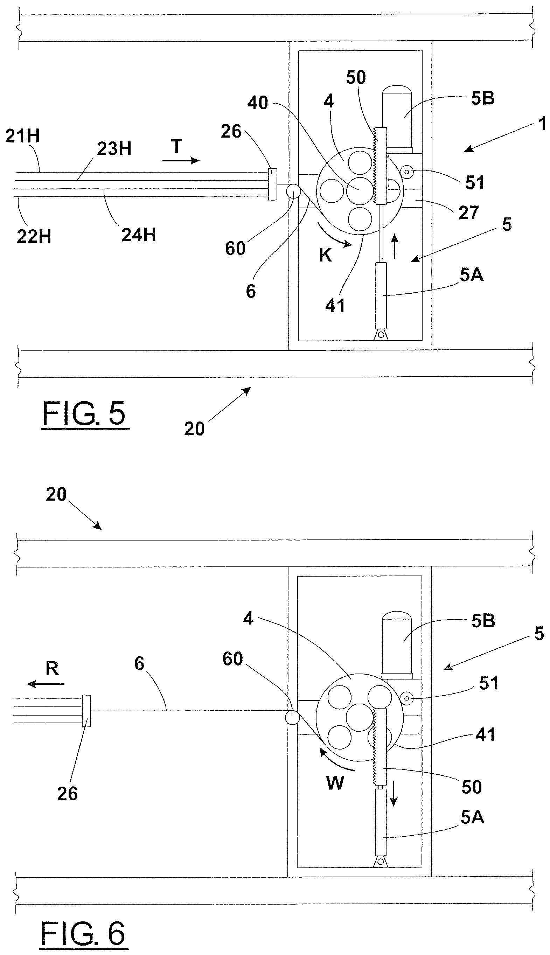

In an interesting second embodiment of the device 1, shown in Figs. 5 and 6, said linear drive element 5 comprises a gas spring 5A, associated with the rack 50 for determining the rotation with same direction of said cogwheel 40 and pulley 4, similarly to what previously described. Furthermore, a ring gear 41 is integral with (or realized into) the outer circumference of said pulley 4, and it is present a geared motor 5B, on whose output shaft is keyed a pinion 51 engaged with the ring gear 41.

The geared motor 5B is adapted to cooperate with said gas spring 5A to determine the rotation in the two directions K, W of the pulley 4, then the ascent and descent of the bed 3

With this constructive solution, the locking means are in fact incorporated into the drive members, for example if the gear unit is of the endless screw and helical wheel type therefore, as is known, irreversible in the motion direction.

Every position of the bed 3 reached, of ascent and descent, even partial, is automatically stabilized.

The interaction between the push of the gas spring 5A and the power of the geared motor 5B can be combined in various ways to make one or the other prevail, nevertheless exploiting the characteristic of said gear unit.

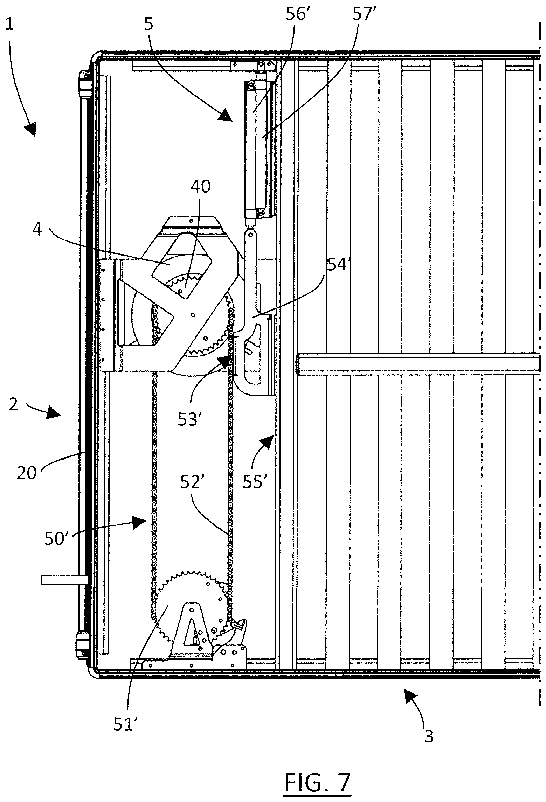

A further embodiment is shown in Fig. 7 in which it is shown a frame complete with a bed 3, but in which, for representation simplicity, it is not shown the system of ropes and return pulleys that are part of the lifting mechanism 2, but which, also in this embodiment, are arranged in a way functionally similar to the one shown in the previous figures. In the present embodiment, the linear drive element 5 comprises two gas springs, 56', 57', arranged parallel one next to the other, connected in succession one to the other and in which one of them is integral with the frame 20 supporting the bed while the other is integral with the motion transformation means, so as to double the useful stroke of the linear drive element 5 with the same minimum encumbrance in the drive direction.

In this embodiment the motion transformation means consist of a second cogwheel 51', substantially coplanar to the cogwheel 40 and having axis rotatably integral with said supporting frame 20 and of a transmission chain, 50', closed in a loop between the cogwheel 40 and the second cogwheel 51'. The second end of the linear drive element 5 is made integral with chain links, 53', of said transmission chain 50', so that the actuation of the linear drive element 5 moves the chain links 53' along the closed path of the transmission chain 50' causing the cogwheel 40 to rotate and thereby causing the bed 3 to be lifted or lowered. More specifically, the second cogwheel 51' is arranged such that at least a linear portion, 52', of the transmission chain 50' runs parallel to the actuation direction of the linear drive element 5. The motion transformation means further comprises a skid, 54', driven to move in a guide rail, 55', integral with the frame 20 and arranged according to the direction of the linear portion 52'. The skid 54' is integral with the second end of the linear drive element 5 as well as with chain links 53' of said linear portion 52'. Thanks to said construction, the actuation of the linear drive element 5 moves the skid 54' along the guide rail 55', thus bringing the transmission chain 50' into motion which in turn drives the cogwheel 40 in rotation.

This last embodiment is particularly solid and reliable over time thanks to the possibility of making solid and secure couplings between the various motion transmission components.

From the above description the peculiar characteristics of the proposed device are clearly clear, in particular regarding its compactness in relation to the width of the vertical excursion allowed to the bed; this advantageous aspect is increasingly evident in comparison with the prior art referred to in the document cited in the introduction.

The vertical excursion possible for the bed can become very wide, thanks to the amplification effect given by a large diameter pulley, which can be easily adopted without particular complications.

The technical solution that provides the geared motor in combination with the gas spring is particularly advantageous.

For all the embodiments described, it is easy to introduce, if not already inherent in the constructive solution itself, means for stabilizing the positions reached by the bed, in order to avoid at least undesirable lowerings, potentially dangerous.

It is also evident that the constructive solutions described are extremely simple, guaranteeing a low production cost.

## Claims

1. Suspended bed (3) comprising a lifting mechanism (2) and a device (1) for driving said lifting mechanism, wherein the mechanism (2) comprises a supporting frame (20) to said bed (3), of rectangular shape, and at least four ropes (21, 22, 23, 24), each of which is secured at its top to a fixed structure (A), said at least four ropes (21, 22, 23, 24) extended downward until a corresponding edge of the said supporting frame (20), then to sequentially engage returning rollers (25), provided in the supporting frame (20) to deflect the same ropes (21, 22, 23, 24) according to a predetermined path which ends with a horizontal portion (21H, 22H, 23H, 24H), displaced below the mentioned supporting frame (20) and almost parallel to the corresponding horizontal portions (21H, 22H, 23H, 24H) of the remaining ropes (21, 22, 23, 24), with all the respective ends bound to a common draw hook (26), which is provided to be moved together with the same ropes (21, 22, 23, 24), wherein said device (1) comprises:
- at least one pulley (4), rotatably carried by the mentioned supporting frame (20), with a substantially vertical rotation axis;
- a cogwheel (40), made coaxially integral to said pulley (4);
- a linear drive element (5), integral with one of its ends with said supporting frame (20) and having associated, at the other end thereof, motion transformation means;
- a flexible cable (6), bound at one end to said pulley (4) and wound about said pulley (4) with a intermediate portion thereof engaged with at least one returning roller (60) arranged downstream and secured with the remaining end to said draw hook (26) of the ropes (21, 22, 23, 24), so that to the rotation of the pulley (4) and of the cogwheel (40) corresponds a driving of the same flexible cable (6) for imparting / enabling to the mentioned draw hook (26) rectilinear movements, respectively in a first direction, in which the same hook (26) and the ropes (21, 22, 23, 24) are pulled to lift said bed (3), and in an opposite direction, in phase relation with the descent of the same bed (3), in which to the hook (26) and to the ropes (21, 22, 23, 24) is permitted a return stroke, wherein said motion transformation means consist of at least a second cogwheel (51') substantially coplanar to said cogwheel (40) and having an axis rotatably integral with said supporting frame (20) and of a transmission chain (50') closed in a loop between said at least one second cogwheel (51') and said cogwheel (40), said second end of said linear drive element (5) being made integral with chain links (53') of said transmission chain, so that the actuation of said linear drive element (5) moves said chain links (53') along the closed path of said transmission chain (50') bringing said cogwheel (40) into rotation, said second cogwheel (51') being arranged in such a way that at least one linear portion (52') of said transmission chain (50') runs parallel to the motion direction of said linear drive element (5), said motion transformation means comprising a skid (54'), guided to move in a guide rail (55') according to the direction of said linear portion (52'), said skid (54') being integral with said second end of said linear drive element (5) as well as with chain links (53') of said linear portion (52').

2. Suspended bed according to claim 1, **characterized in that** said linear drive element (5) is a linear actuator.

3. Suspended bed according to the claim 1, **characterized in that** said linear drive element (5) is at least a gas spring, which push action is directed to impart a translational motion to said motion transformation means which transform said translational motion into a synchronous rotation of said cogwheel (40) and pulley (4) in a direction concordant with the action of lifting the mentioned bed (3).

4. Suspended bed according to the previous claim **characterized in that** said linear drive element (5) consists of two gas springs (56', 57') arranged parallel to each other, connected in succession to each other and in which one of them is integral to said supporting frame (20) while the other is integral with said motion transformation means, so as to double the useful stroke of said linear drive element (5) with the same minimum encumbrance in the drive direction.

5. Suspended bed according to claim 3, **characterized in that** locking means are associated with said linear drive element (5), provided to stabilize at least the raised position of the said bed (3).

6. Suspended bed according to the claim 1, **characterized in that** said motion transformation means are constituted by a rack (50), extended parallel to the element (5) itself and intended to engage with said cogwheel (40) in order to rotate it together with said pulley (4).

7. Suspended bed according to the previous claim, **characterized in that** said linear drive element (5) comprises: a gas spring (5A), associated to said rack (50) to determine the rotation with same direction of said cogwheel (40) and pulley (4); a ring gear (41) integral with the outer circumference of said pulley (4); a geared motor (5B), on whose output shaft is keyed a pinion (51) meshed with said ring gear (41), with said geared motor (5B) arranged to cooperate with said gas spring (5A) to determine the rotation in the two directions of said pulley (4), then the ascent and descent of the bed (3) as well as to stabilize at least the raised position of the latter.

8. Suspended bed according to any of the preceding claims, **characterized in that** said cogwheel (40) has a diameter lower than that of the mentioned pulley (4).

## Patentansprüche

1. Hängebett (3), umfassend einen Hebemechanismus (2) und eine Vorrichtung (1) zum Antreiben des besagten Hebemechanismus, wobei der Mechanismus (2) einen Tragrahmen (20) an dem besagten Bett (3) mit rechteckiger Form und mindestens vier Seile (21, 22, 23, 24) umfasst, von denen jedes an seiner Oberseite an einer festen Struktur (A) befestigt ist, wobei die mindestens vier Seile (21, 22, 23, 24) sich nach unten bis zur einen entsprechenden Kante des Tragrahmens (20) erstrecken, um dann nacheinander in Umlenkrollen (25) einzugreifen, die in dem Tragrahmen (20) vorgesehen sind, um die Seile (21, 22, 23, 24) gemäß einer vorbestimmten Bahn umzulenken, die mit einem horizontalen Abschnitt (21H, 22H, 23H, 24H) endet, der unter dem genannten Tragrahmen (20) verschoben ist und nahezu parallel zu den entsprechenden horizontalen Abschnitten (21H, 22H, 23H, 24H) der verbleibenden Seile (21, 22, 23, 24) ist, wobei alle jeweiligen Enden an einen gemeinsamen Zughaken (26) gebunden sind, der dazu vorgesehen ist, zusammen mit den besagten Seilen (21, 22, 23, 24) bewegt zu werden, wobei die Vorrichtung (1) Folgendes umfasst:
- mindestens eine Riemenscheibe (4), die drehbar von dem genannten Tragrahmen (20) getragen wird, mit einer im Wesentlichen vertikalen Drehachse;
- ein Zahnrad (40), das koaxial einstückig mit der Riemenscheibe (4) hergestellt ist;
- ein Linearantriebselement (5), das mit einem seiner Enden mit dem Tragrahmen (20) einstückig ist und an seinem anderen Ende zugeordnete Bewegungsumwandlungsmittel aufweist;
- ein flexibles Kabel (6), das an einem Ende an die Riemenscheibe (4) gebunden und um die Riemenscheibe (4) gewickelt ist, wobei ein Zwischenabschnitt davon mit mindestens einer Umlenkrolle (60) in Eingriff steht, die stromabwärts angeordnet und mit dem verbleibenden Ende an dem Zughaken (26) der Seile (21, 22, 23, 24) befestigt ist, so dass der Drehung der Riemenscheibe (4) und des Zahnrades (40) ein Antrieb des flexiblen Kabels (6) selbst entspricht, um dem genannten Zughaken (26) geradlinige Bewegungen zu erteilen/gestatten, und zwar in einer ersten Richtung, in welcher der besagte Haken (26) und die Seile (21, 22, 23, 24) gezogen werden, um das Bett (3) anzuheben, und in einer entgegengesetzten Richtung in Phasenbeziehung mit dem Abfall des Bettes (3), in der dem Haken (26) und den Seilen (21, 22, 23, 24) ein Rückhub gestattet ist,
wobei die Bewegungsumwandlungsmittel aus mindestens einem zweiten Zahnrad (51'), das im Wesentlichen koplanar zu dem Zahnrad (40) ist und eine Achse aufweist, die drehbar einstückig mit dem Tragrahmen (20) ist, und aus einer Übertragungskette (50') bestehen, die in einer Schleife zwischen dem mindestens einen zweiten Zahnrad (51') und dem Zahnrad (40) geschlossen ist, wobei das zweite Ende des Linearantriebselements (5) einstückig mit Kettengliedern (53') der Übertragungskette ausgebildet ist, so dass die Betätigung des Linearantriebselements (5) die Kettenglieder (53') entlang der geschlossenen Bahn der Übertragungskette (50') bewegt, wodurch das Zahnrad (40) in Drehung versetzt wird, wobei das zweite Zahnrad (51') derart angeordnet ist, dass mindestens ein linearer Abschnitt (52') der Übertragungskette (50') parallel zur Bewegungsrichtung des Linearantriebselements (5) verläuft, wobei die Bewegungsumwandlungsmittel eine Gleitkufe (54') umfassen, die in einer Führungsschiene (55') entsprechend der Richtung des linearen Abschnitts (52') geführt wird, wobei die Gleitkufe (54') einstückig mit dem zweiten Ende des linearen Antriebselements (5) sowie mit Kettengliedern (53') des linearen Abschnitts (52') ausgebildet ist.

2. Hängebett nach Anspruch 1, **dadurch gekennzeichnet, dass** das Linearantriebselement (5) ein Linearantrieb ist.

3. Hängebett nach Anspruch 1, **dadurch gekennzeichnet, dass** das Linearantriebselement (5) mindestens eine Gasfeder ist, wobei die Schubwirkung so gerichtet ist, dass sie eine Verschiebungsbewegung auf die Bewegungsumwandlungsmittel ausübt, welche die Verschiebungsbewegung in eine synchrone Drehung des Zahnrades (40) und der Riemenscheibe (4) in einer mit der Wirkung des Anhebens des genannten Bettes (3) übereinstimmender Richtung umwandeln.

4. Hängebett nach dem vorhergehenden Anspruch, **dadurch gekennzeichnet, dass** das Linearantriebselement (5) aus zwei Gasfedern (56', 57') besteht, die parallel zueinander angeordnet und nacheinander miteinander verbunden sind und bei denen eine von ihnen einstückig mit dem Tragrahmen (20) ausgebildet ist, während die andere einstückig mit den Bewegungsumwandlungsmitteln ausgebildet ist, um den Nutzhub des Linearantriebselements (5) mit der gleichen minimalen Belastung in der Antriebsrichtung zu verdoppeln.

5. Hängebett nach Anspruch 3, **dadurch gekennzeichnet, dass** dem Linearantriebselement (5) Verriegelungsmittel zugeordnet sind, die vorgesehen sind, um zumindest die angehobene Position des Bettes (3) zu stabilisieren.

6. Hängebett nach Anspruch 1, **dadurch gekennzeichnet, dass** die Bewegungsumwandlungsmittel durch eine Zahnstange (50) gebildet sind, die sich parallel zu dem Element (5) selbst erstreckt und dazu bestimmt ist, mit dem Zahnrad (40) in Eingriff zu kommen, um es zusammen mit der Riemenscheibe (4) zu drehen.

7. Hängebett nach dem vorhergehenden Anspruch, **dadurch gekennzeichnet, dass** das Linearantriebselement (5) umfasst: eine Gasfeder (5A), die der Zahnstange (50) zugeordnet ist, um die Drehung mit der gleichen Richtung des Zahnrades (40) und der Riemenscheibe (4) zu bestimmen; ein mit dem Außenumfang der Riemenscheibe (4) einstückiges Hohlrad (41); einen Getriebemotor (5B), auf dessen Abtriebswelle ein Ritzel (51) aufgekeilt ist, das mit dem Hohlrad (41) kämmt, wobei der Getriebemotor (5B) so angeordnet ist, dass er mit der Gasfeder (5A) zusammenwirkt, um die Drehung in den zwei Richtungen der Riemenscheibe (4), und zwar die Auf- und Abbewegung des Bettes (3) zu bestimmen und zumindest dessen angehobene Position zu stabilisieren.

8. Hängebett nach einem der vorhergehenden Ansprüche, **dadurch gekennzeichnet, dass** das Zahnrad (40) einen Durchmesser aufweist, der geringer ist als derjenige der genannten Riemenscheibe (4).

## Revendications

1. Lit suspendu (3) comprenant un mécanisme de levage (2) et un dispositif (1) pour entraîner ledit mécanisme de levage, où le mécanisme (2) comprend un cadre de support (20) audit lit (3), de forme rectangulaire, et au moins quatre câbles (21, 22, 23, 24), dont chacun est fixé à sa partie supérieure à une structure fixe (A), lesdits au moins quatre câbles (21, 22, 23, 24) s'étendant vers le bas jusqu'à un bord correspondant dudit cadre de support (20), puis pour engager séquentiellement des rouleaux de retour (25), prévus dans le cadre de support (20) pour dévier les mêmes câbles (21, 22, 23, 24) selon une trajectoire prédéterminée qui se termine par une partie horizontale (21H, 22H, 23H, 24H), déplacée au-dessous du cadre de support mentionné (20) et presque parallèle aux parties horizontales correspondantes (21H, 22H, 23H, 24H) des câbles restants (21, 22, 23, 24), avec toutes les extrémités respectives liées à un crochet de traction commun (26), qui est prévu pour être déplacé avec les mêmes câbles (21, 22, 23, 24), où ledit dispositif (1) comprend :
- au moins une poulie (4), portée de manière rotative par le cadre de support mentionné (20), avec un axe de rotation sensiblement vertical ;
- une roue dentée (40), solidaire coaxialement de ladite poulie (4);
- un élément d'entraînement linéaire (5), solidaire à l'une de ses extrémités dudit cadre de support (20) et auquel sont associés, à son autre extrémité, des moyens de transformation de mouvement ;
- un câble flexible (6), lié à une extrémité à ladite poulie (4) et enroulé autour de ladite poulie (4) avec une partie intermédiaire de celle-ci engagée avec au moins un rouleau de retour (60) disposé en aval et fixé avec l'extrémité restante audit crochet de traction (26) des câbles (21, 22, 23, 24), de sorte qu'à la rotation de la poulie (4) et de la roue dentée (40) correspond un entraînement du même câble flexible (6) pour conférer/permettre au crochet de traction mentionné (26) des mouvements rectilignes, respectivement dans une première direction, où le même crochet (26) et les câbles (21, 22, 23, 24) sont tirés pour soulever ledit lit (3), et dans une direction opposée, en relation de phase avec la descente du même lit (3), où au crochet (26) et aux câbles (21, 22, 23, 24) est autorisée une course de retour,
où lesdits moyens de transformation de mouvement sont constitués d'au moins une seconde roue dentée (51') sensiblement coplanaire à ladite roue dentée (40) et ayant un axe solidaire en rotation dudit cadre de support (20) et d'une chaîne de transmission (50') fermée en boucle entre ladite au moins une seconde roue dentée (51') et ladite roue dentée (40), ladite seconde extrémité dudit élément d'entraînement linéaire (5) étant rendue solidaire de maillons de chaîne (53') de ladite chaîne de transmission, de sorte que l'actionnement dudit élément d'entraînement linéaire (5) déplace lesdits maillons de chaîne (53') le long de la trajectoire fermée de ladite chaîne de transmission (50') amenant ladite roue dentée (40) en rotation, ladite seconde roue dentée (51') étant agencée de telle sorte qu'au moins une partie linéaire (52') de ladite chaîne de transmission (50') s'étend parallèlement à la direction de mouvement dudit élément d'entraînement linéaire (5), lesdits moyens de transformation de mouvement comprenant un patin (54'), guidé pour se déplacer dans un rail de guidage (55') selon la direction de ladite partie linéaire (52'), ledit patin (54') étant solidaire de ladite seconde extrémité dudit élément d'entraînement linéaire (5) ainsi que de maillons de chaîne (53') de ladite partie linéaire (52').

2. Lit suspendu selon la revendication 1, **caractérisé en ce que** ledit élément d'entraînement linéaire (5) est un actionneur linéaire.

3. Lit suspendu selon la revendication 1, **caractérisé en ce que** ledit élément d'entraînement linéaire (5) est au moins un ressort à gaz, ladite action de poussée étant dirigée pour conférer un mouvement de translation auxdits moyens de transformation de mouvement qui transforment ledit mouvement de translation en une rotation synchrone de ladite roue dentée (40) et de ladite poulie (4) dans une direction concordant avec l'action de soulèvement du lit mentionné (3).

4. Lit suspendu selon la revendication précédente, **caractérisé en ce que** ledit élément d'entraînement linéaire (5) est constitué de deux ressorts à gaz (56', 57') disposés parallèlement l'un à l'autre, reliés en série l'un à l'autre et où l'un d'eux est solidaire dudit cadre de support (20) tandis que l'autre est solidaire desdits moyens de transformation de mouvement, de manière à doubler la course utile dudit élément d'entraînement linéaire (5) avec le même encombrement minimal dans la direction d'entraînement.

5. Lit suspendu selon la revendication 3, **caractérisé en ce que** des moyens de verrouillage sont associés audit élément d'entraînement linéaire (5), prévus pour stabiliser au moins la position relevée dudit lit (3).

6. Lit suspendu selon la revendication 1, **caractérisé en ce que** lesdits moyens de transformation de mouvement sont constitués par une crémaillère (50), s'étendant parallèlement à l'élément (5) lui-même et destinée à s'engager avec ladite roue dentée (40) pour la faire tourner avec ladite poulie (4).

7. Lit suspendu selon la revendication précédente, **caractérisé en ce que** ledit élément d'entraînement linéaire (5) comprend : un ressort à gaz (5A), associé à ladite crémaillère (50) pour déterminer la rotation dans la même direction de ladite roue dentée (40) et de ladite poulie (4) ; une couronne dentée (41) solidaire de la circonférence extérieure de ladite poulie (4) ; un motoréducteur (5B), sur l'arbre de sortie duquel est claveté un pignon (51) engrené avec ladite couronne dentée (41), ledit motoréducteur (5B) étant agencé pour coopérer avec ledit ressort à gaz (5A) pour déterminer la rotation dans les deux directions de ladite poulie (4), puis la montée et la descente du lit (3) ainsi que pour stabiliser au moins la position relevée de ce dernier.

8. Lit suspendu selon l'une quelconque des revendications précédentes, **caractérisé en ce que** ladite roue dentée (40) a un diamètre inférieur à celui de la poulie mentionnée (4).
